# EUROPÄISCHE PATENTANMELDUNG

(11) **EP 3 699 710 A1**
(43) Veröffentlichungstag der Anmeldung: **26.08.2020**
(21) Anmeldenummer: 19158249.3
(22) Anmeldetag: 20.02.2019
(51) Int. Cl.: G05B 23/02

(54) **VERFAHREN UND VORRICHTUNG ZUM STRUKTURIERTEN BEREITSTELLEN VON INFORMATIONEN EINES PRODUKTIONSSYSTEMS UND/ODER EINER PRODUKTIONSSYSTEMKOMPONENTE**

(71) Anmelder: Siemens Aktiengesellschaft, 80333 München (DE)
(72) Erfinder: Unverdorben, Stephan, 91353 Hausen (DE)

(57) **Zusammenfassung**

Zusammenfassend betrifft die Erfindung ein Verfahren und eine Vorrichtung zum strukturierten Bereitstellen von Informationen 10 eines Produktionssystems 1 und/oder einer Produktionssystemkomponente 2 an eine Datenverarbeitungseinheit 3 und/oder Datenausgabeeinheit 4, mit den Schritten: Empfangen S1 wenigstens einer Information 10 von einem Produktionssystem 1 und/oder wenigstens einer Produktionssystemkomponente 2; Bereitstellen S2 der empfangenen Information 10 an eine Datenverarbeitungseinheit 3 und/oder Datenausgabeeinheit 4, falls die Information 10 einem Informationsselektionsmuster, ISM, entspricht.

Diesbezüglich wird eine erhöhte Entscheidungsgeschwindigkeit/Entscheidungsflexibilität in kritischen Situationen gewährt und Risiko, falsche Entscheidungen aufgrund einer schlechten Datenbasis zu treffen, minimiert.

## Beschreibung

In modernen Produktionssystemen können durch eine falsche und/oder ungenügende Reaktion auf Prozessveränderungen durch verantwortliche Nutzer, beispielsweise Maschinenbediener, Instandhaltungsmitarbeiter, Inbetriebnehmer, Wartungspersonal, die aufgrund von Fehlinterpretation von Prozessdaten entstehen kann, Probleme von der nicht optimalen Bedienung des Produktionssystems bzw. der Produktionssystemkomponente bis hin zu einer Beschädigung und Ausfall des Produktionssystems bzw. der Produktionssystemkomponente auftreten.

Dieses Problem entsteht dadurch, dass nur ein bestimmter Satz an Informationen aus einer großen Menge von Informationen über das Produktionssystem bzw. die Produktionssystemkomponente (die zur Betriebszeit entstehen) für bestimmte Nutzer relevant sind und die relevanten Informationen nicht immer im vollen Umfang durch den entsprechenden Nutzer aus der großen Menge an Informationen korrekt erfasst werden können. Fehlende oder falsche Informationen können zu falschen oder verspäteten Handlungen der einzelnen Nutzer im Rahmen ihres Aufgaben- und Tätigkeitsbereiches führen. Dies kann entsprechende Probleme bzw. Fehler in Bezug auf die betrachteten Produktionssysteme bzw. Produktionssystemkomponente verursachen.

Diese Problematik wird sich in Zukunft noch deutlich verstärken, da im Rahmen einer digitalisierten und vernetzten Produktion, die Menge der Information, die während der Laufzeit des Produktionssystems bzw. der Produktionssystemkomponente entstehen, deutlich zunehmen wird. Dadurch steigen die Komplexität und die Anfälligkeit für Fehler.

Im Stand der Technik bekannte Lösungen umfassen unterschiedliche Tools, die sich nach Nutzer und dessen Aufgaben- und Tätigkeitsbereich unterscheiden. Diese Tools stellen eine Benutzerschnittstelle bereit, über die die Informationen des Produktionssystems bzw. der Produktionssystemkomponente eingesehen werden können. Zudem können diese Tools meist in gewissen Grenzen, beispielsweise durch Anpassungen an der Benutzerschnittstelle und der Anzeige von bestimmten Informationen modifiziert werden. Allerdings werden diese Tools meist von mehreren Nutzern mit unterschiedlichem Aufgaben- und Tätigkeitsbereich, die komplett oder zumindest teilweise unterschiedliche Informationen erfordern genutzt. Je nach Grad der möglichen Toolmodifikation und Anzahl der Nutzer, die das Tool nutzen, werden mehr oder weniger relevante Informationen angezeigt. Das bedeutet im Umkehrschluss, dass mit hoher Wahrscheinlichkeit auch Informationen angezeigt werden, die nicht für alle Nutzer relevant sind, was zu den oben ausgeführten Problemen führen kann. Zudem wird das Berücksichtigen eines neu entstandenen Satzes an Informationen ohne Anpassungen des Produktionssystems bzw. der Produktionssystemkomponente, aber auch der Anzeigetools erschwert.

Es ist daher eine Aufgabe der vorliegenden Erfindung ein Verfahren und eine Vorrichtung zum strukturierten Bereitstellen von Informationen eines Produktionssystems und/oder einer Produktionssystemkomponente für eine Datenverarbeitungseinheit und/oder Datenausgabeeinheit zu schaffen.

Diese Aufgabe wird erfindungsgemäß durch ein Verfahren zum strukturierten Bereitstellen von Informationen mit den in Patentanspruch 1 angegebenen Merkmalen gelöst.

Die Erfindung schafft demnach ein Verfahren zum strukturierten Bereitstellen von Informationen eines Produktionssystems und/oder einer Produktionssystemkomponente an eine Datenverarbeitungseinheit und/oder Datenausgabeeinheit mit den Schritten:
Empfangen wenigstens einer Information von einem Produktionssystem und/oder wenigstens einer Produktionssystemkomponente und Bereitstellen der empfangenen Information an eine Datenverarbeitungseinheit und/oder Datenausgabeeinheit, falls die Information einem Informationsselektionsmuster entspricht.

In vorteilhafter Weise ist erkannt worden, das ein strukturiertes Bereitstellen an Informationen, insbesondere in komplexen Produktionssystemen und/oder komplexer Produktionssystemkomponenten das Risiko verringert, das falsche Entscheidungen im Bereich der Wartung und/oder Instandhaltung, als auch im Prozessmanagement aufgrund einer schlechten Informationsbasis und/oder zu hoher Informationskomplexität getroffen werden. Dies betrifft alle Laufzeit-bezogenen notwendigen Interaktionen mit dem System, die ihre Basis auf Daten haben und an denen Personen bzw. andere Systeme beteiligt sind.

Ferner können bei einem erhöhten Informationsaufkommen, wie das beispielsweise in Industrie 4.0 Szenarien oder einer wandelnden Fabrik der Fall ist, einige der bereitgestellten Informationen interessant sind, aber andere wiederum sind für das Produktionssystem und/oder die Produktionssystemkomponente als kritisch anzusehen. Werden alle bereitgestellten Informationen überwacht bzw. ausgewertet, kann der Fall eintreten, dass als besonders kritisch eingestufte Informationen zu spät wahrgenommen bzw. ausgewertet werden und ein erhöhtes Risiko besteht, das auf Basis falscher Informationen die falschen Entscheidungen getroffen bzw. die falschen Maßnahmen umgesetzt werden. Die vorliegende Erfindung erhöht in vorteilhafter Weise die Entscheidungsgeschwindigkeit, als auch die Entscheidungsflexibilität in kritischen Situationen.

Des Weiteren werden die Informationen gezielt bereitgestellt, so dass beispielsweise die Informationen die einen kritischen Zustand eines Produktionssystems und/oder Produktionssystemkomponente darstellen, mit erhöhter Priorität bereitgestellt werden.

In vorteilhafter Weise kann die Anzahl auftretender Fehler und/oder Störungen in einem Produktionssystem und/oder einer Produktionssystemkomponente präventiv verringert werden. Beispielsweise können Informationen von Altsystemen und/oder gleichen Produktionssystemen und/oder Produktionssystemkomponenten übernommen werden und auf Basis dieser Informationen kann das Bereitstellen der Informationen für neue Produktionssysteme und/oder Produktionssystemkomponenten abgeleitet werden. Dies verringert die Wahrscheinlichkeit von bereits bekannten Fehlern und steigert die Performance.

Weiterhin vorteilhaft ist, dass notwendige Informationen konsequent gepflegt und gezielt bzw. strukturiert bereitgestellt werden, wodurch die Prozessplanung sowie die Prozesssteuerung verbessert betrieben werden können und sich somit eine Performancesteigerung in dem Produktionssystem und/oder der Produktionssystemkomponente ergibt. Das Produktionssystem und/oder die Produktionssystemkomponente kann optimiert betrieben werden und auftretende bzw. neue Fehler werden schneller erkannt.

Weitere vorteilhafte Ausgestaltungen der Erfindung sind Gegenstand der Unteransprüche sowie der im Folgenden beschriebenen Ausführungsbeispiele.

In einer vorteilhaften Ausführungsform des Verfahrens erfolgt das strukturierte Bereitstellen von Informationen eines Produktionssystems zur Laufzeit des Produktionssystems und/oder der Produktionssystemkomponente.

In einer vorteilhaften Ausführungsform des Verfahrens umfasst die Produktionssystemkomponente Sensorik, Aktuatoren, Steuereinheiten, Überwachungseinheiten, beispielsweise Video, Verarbeitungseinheiten, beispielsweise Prozessoren, Mikrocontroller, FPGA, Asics und/oder Kommunikationseinheiten.

Technische Produktionssystemkomponenten in Produktionssysteme insbesondere in Industrie 4.0 Szenarien kommunizieren über ein Netzwerk zu einander bzw. mit der entsprechenden Steuerung. Die dabei bereitgestellten Informationen sind aber nicht für alle an der Kommunikation beteiligten Komponenten bzw. Nutzer relevant. Zudem ist nicht jede Produktionssystemkomponente ausgelegt, die anfallende Informationsmenge zu verarbeiten. Durch das strukturierte Bereitstellen an Informationen wird die Menge an Informationen auf die notwendigen bzw. benötigten Informationen reduziert und eine schnellere Reaktion und somit Performancesteigerung erzielt.

In einer Ausführungsform umfassen die Produktionssystemkomponenten selbstlernende Komponenten, die eine Intelligenz aufweisen, womit nur noch die relevanten Informationen und mögliche interessante Informationen aus dem Umfeld eines entsprechenden Nutzers bereitgestellt werden.

In einer weiteren vorteilhaften Ausführungsform des Verfahrens ist die empfangene Information zentral und/oder dezentral gespeichert und/oder wird in Echtzeit empfangen.

In vorteilhafter Weise können gespeicherte Informationen strukturiert für einen Nutzer bzw. ein Assistenzsystem bereitgestellt werden. Die Informationen können beispielsweise in einer Datenbank zentral/dezentral gespeichert sein und bei Bedarf strukturiert bereitgestellt werden. Dies hat den Vorteil, dass beispielsweise Analysen und Fehlersuche gezielt durchgeführt werden können. Es werden nur die Informationen bereitgestellt, die beispielsweise zum Auffinden und Analysieren eines kritischen Fehlers notwendig sind. Zudem können die Informationen in Echtzeit strukturiert bereitgestellt werden. Dies ermöglicht eine gezielte Überwachung und Fehlersuche beim Auftreten von kritischen Fehlern in Produktionssystemen und/oder in Produktionssystemkomponenten.

In einer weiteren vorteilhaften Ausführungsform des Verfahrens umfasst die Information digitale und/oder analoge Informationen.

Durch Produktionssysteme und/oder Produktionssystemkomponenten fallen während der Produktion sowohl digitale als auch analoge Informationen an, die von einem Nutzer beispielsweise zur Fehlersuche berücksichtigt und ausgewertet werden müssen. Mittels einer strukturierten Bereitstellung an relevanten Informationen, die beispielsweise kritisch sind, wird das Risiko für ein Auftreten an vermeidbaren Fehlern reduziert.

In einer weiteren vorteilhaften Ausführungsform des Verfahrens umfasst das ISM vordefinierte Informationsselektionsmuster und/oder gelernte Informationsselektionsmuster.

Unter einem Informationsselektionsmuster ist ein Muster zu verstehen, dass Informationen umfasst, die beispielsweise durch einen Nutzer wiederholt zur Verarbeitung selektiert wurden. Das Informationsselektionsmuster beruht somit auf Erfahrungswerten bzw. sich wiederholende Vorgehensweisen eines Nutzers. Hierbei wird berücksichtigt, für welchen Zweck und wie oft die Informationen selektiert und bereitgestellt wurden.

Unter einem Assistenzsystem ist beispielsweise eine zusätzliche Komponente zu verstehen, die strukturiert bereitgestellte Informationen für weitere Prozesse verarbeitet, beispielsweise für Analyseprozesse zur Optimierung der Prozesssteuerung, für Prozessoptimierung und Fehlerdetektion. Alternativ kann ein Assistenzsystem eine Speichereinheit umfassen, in der die strukturiert bereitgestellten Informationen abgelegt werden. Weiterhin kann das Assistenzsystem ein Algorithmus, Skript, Tool oder Bot bzw. ein sogenanntes Heatmap sein, dass ein Selektionsverhalten an Informationen eines Nutzers in Bezug auf Zustände des Produktionssystems und/oder der Produktionssystemkomponente erfasst und ein Informationsselektionsmuster erstellt.

Mit vordefinierten Informationsselektionsmustern kann die Erfahrung bzw. die Optimierung bereits bestehender Produktionssysteme und/oder Produktionssystemkomponenten auf neue Systeme und/oder Komponenten angewendet werden. Dies hat den Vorteil das bereits bekannte kritische Fehler oder Zustände eines Systems und/oder Komponente schneller erkannt und vermieden werden können.

Gelernte Informationsselektionsmuster umfassen die von einem Nutzer selektierten Informationen eines Produktionssystems und/oder einer Produktionssystemkomponente. Diese Informationen können beispielsweise kritische Informationen für das System und/oder die Komponente darstellen und werden entsprechend in ihrer Anzahl häufig durch den Nutzer selektiert. Das gelernte Informationsselektionsmuster umfasst beispielsweise die Anzahl der einzelnen Selektionen, als auch den Zustand des Systems und/oder der Komponente bzw. einen Fehler, der aufgetreten ist und welche Informationen zu einer Analyse bzw. Fehlerbeseitigung selektiert wurden. Diese Informationen werden genutzt, um Rückschlüsse auf die Selektion zu ziehen und das Informationsselektionsmuster gemäß dem Verhalten eines Nutzers an zu lernen. Dies hat den Vorteil, dass speziell für ein entsprechendes Nutzerverhalten und Fehlerauftreten in einem Produktionssystem oder einer Produktionssystemkomponente entsprechende Informationen strukturiert bereitgestellt werden. Die Performance wird gesteigert und die Prozessplanung/Prozesssteuerung wird verbessert.

In einer weiteren vorteilhaften Ausführungsform des Verfahrens wird das ISM manuell durch Informationsselektion eines Nutzers gelernt oder trainiert.

Über eine zuvor bestimmte Zeitdauer werden durch ein Produktionssystem und/oder eine Produktionssystemkomponente Informationen bereitgestellt. Die zuvor bestimmte Zeitdauer hat gegenüber einer Momentzustandsaufnahme den Vorteil, dass möglichst viele und unterschiedlichste Zustände des Produktionssystems und/oder der Produktionskomponente erfasst werden, in denen Informationen genutzt oder selektiert wurden. Durch einen Nutzer wird beispielsweise mittels eines Feedbacks, der Nutzung der entsprechenden Information oder der Reaktion auf die Informationen bestätigt, ob die Information relevant, irrelevant oder beispielsweise ab einem bestimmten Schwellwert relevant sind. Somit können Rückschlüsse gezogen und das Informationsselektionsmuster angelernt werden, sodass die Anzahl der bereitgestellten Informationen reduziert wird, bis nur noch relevante Informationen bereitgestellt werden.

In einer weiteren vorteilhaften Ausführungsform des Verfahrens wird das ISM automatisch durch Informationsselektion eines Assistenzsystems gelernt oder trainiert.

In vorteilhafter Weise werden durch ein Assistenzsystem Abläufe, Zustände und Fehlerzustände in einem Produktionssystem und/oder an einer Produktionssystemkomponente erfasst und mit einem entsprechenden Selektionsverhalten eines Nutzers für bereitgestellte Informationen verglichen. Es können automatisch Kombinationen bzw. Informationsselektionsmuster erstellt werden, die schnell und effizient die notwendige Information zu den entsprechenden Zuständen bereitstellen. Das Anlernen und Trainieren erfolgt automatisch und im Hintergrund mit geringem Ressourcenaufwand.

In einer weiteren vorteilhaften Ausführungsform des Verfahrens umfasst das vordefinierte ISM die Informationsselektion eines weiteren Nutzers.

In vorteilhafter Weise kann auf Erfahrungswerte eines weiteren Nutzers zurückgegriffen werden. Somit werden beispielsweise fehlende Kenntnis und Erfahrung von dem Produktionssystem und/oder der Produktionssystemkomponente ausgeglichen. Zudem wird sichergestellt, dass ein Nutzer aktiv unterstützt wird und alle wichtigen bzw. relevanten Information, die der Nutzer aus unterschiedlichen Gründen, beispielsweise fehlende Kenntnis, falsche Beurteilung der Information, für unwichtig erachtet, bereitgestellt bekommt.

In einer weiteren vorteilhaften Ausführungsform des Verfahrens erfolgt das Lernen oder Training über eine bestimmte Zeitdauer.

In vorteilhafter Weise werden somit möglichst viele unterschiedliche Situationen erfasst, in denen Informationen bereitgestellt und verwendet werden.

In einer weiteren vorteilhaften Ausführungsform des Verfahrens erfolgt das Lernen oder Training wiederholt.

Insbesondere weisen Produktionssysteme in Industrie 4.0 Szenarien eine hohe Fluktuation an Funktionen auf, wodurch sich der Informationsgehalt stetig ändert. Ein wiederholtes Ausführen berücksichtigt neue Informationen und deren eventuelle Selektion in Bezug auf Zustände des Produktionssystems und/oder der Produktionssystemkomponente.

In einer weiteren vorteilhaften Ausführungsform des Verfahrens ist das ISM als ein Deep Neural Netwerk, DNN, ausgebildet und umfasst ein Concolutional Neural Netwerk, CNN, und/oder ein Recurrent Neural Netwerk und/oder ein Deep Feed Forward Netwerk.

Ein Deep Neural Network ist ein neurales Netzwerk mit einer gewissen Komplexität, das aus mehr als zwei Schichten besteht. Deep Neural Networks verwenden ein mathematisches Modell, um Daten in komplexer Weise zu verarbeiten. Deep Neural Networks umfassen im Allgemeinen eine Technologie, um Aktivitäten eines menschlichen Gehirns nach zu bilden, insbesondere die Mustererkennung. Ein neurales Netzwerk umfasst eine Eingangsschicht, eine Ausgangsschicht, sowie wenigstens eine verborgene Schicht zwischen der Eingangs- und Ausgangsschicht. Jede Schicht führt dabei spezielle Arten von Sortieren und Einordnen von Daten durch. Insbesondere sind neurale Netzwerke für die Verarbeitung von nicht markierten und/oder unstrukturierten Daten geeignet. Insbesondere stellen neurale Netzwerke eine Art von Maschinenlernen dar, bei denen künstliche Intelligenz verwendet wird, um Informationen zu klassifizieren und zu sortieren.

In vorteilhafter Weise können somit selektierte bzw. bereitgestellte Informationen und der Zusammenhang zwischen diesen Informationen und dem Zustand eines Produktionssystems und/oder einer Produktionssystemkomponente hergestellt und klassifiziert werden, sowie ein Informationsselektionsmuster abgeleitet werden.

Die Erfindung schafft ferner eine Vorrichtung zum strukturierten Bereitstellen von Informationen mit den in Patentanspruch 11 angegebenen Merkmalen.

Die Erfindung schafft demnach eine Vorrichtung zum strukturierten Bereitstellen von Informationen eines Produktionssystems und/oder einer Produktionskomponente an eine Datenverarbeitungseinheit und/oder Datenausgabeeinheit, umfassend: eine Kommunikationsschnittstelle konfiguriert zum Empfangen wenigstens einer Information eines Produktionssystems und/oder wenigstens einer Produktionssystemkomponente und eine Verarbeitungseinheit konfiguriert zum Bereitstellen der empfangenen Information an eine Datenverarbeitungseinheit und/oder Datenausgabeeinheit falls die Information einem Informationsselektionsmuster entspricht.

In einer vorteilhaften Ausführungsform der Vorrichtung ist die Kommunikationsschnittstelle konfiguriert, die bereitgestellte Information an die Datenverarbeitungseinheit und/oder Datenausgabeeinheit zu übertragen.

Die Erfindung betrifft darüber hinaus eine Produktionssystemkomponente, welche eine Vorrichtung der vorliegenden Erfindung umfasst und ausgebildet ist, ein Verfahren gemäß der vorliegenden Erfindung auszuführen.

Die Erfindung betrifft darüber hinaus ein Computerprogrammprodukt, welches die Durchführung eines Verfahrens zum strukturierten Bereitstellen von Informationen auf einer physischen Vorrichtung veranlasst.

Die Erfindung betrifft darüber hinaus einen Datenspeicher, für das Computerprogrammprodukt, wobei der Datenspeicher das Computerprogrammprodukt speichert und/oder bereitstellt.

Im Weiteren wird die Erfindung anhand beispielhafter Implementierungen unter Bezugnahme auf die beigelegten Figuren näher erläutert.

Es zeigen:
- Fig. 1: ein Blockschaltbild zur Darstellung eines ersten Ausführungsbeispiels der vorliegenden Erfindung;
- Fig. 2: ein Blockschaltbild zur Darstellung eines zweiten Ausführungsbeispiels der vorliegenden Erfindung;
- Fig. 3: ein Blockschaltbild zur Darstellung eines dritten Ausführungsbeispiels der vorliegenden Erfindung;
- Fig. 4: ein Blockschaltbild zur Darstellung eines vierten Ausführungsbeispiels der vorliegenden Erfindung;
- Fig. 5: ein Blockschaltbild zur Darstellung eines fünften Ausführungsbeispiels der vorliegenden Erfindung;
- Fig. 6: ein Ablaufdiagramm zur Darstellung eines möglichen Ausführungsbeispiels eines erfindungsgemäßen Verfahrens zum strukturierten Bereitstellen von Informationen;
- Fig. 7: ein Blockschaltbild zur Darstellung eines möglichen Ausführungsbeispiels einer erfindungsgemäßen Vorrichtung zum strukturierten Bereitstellen von Informationen;
- Fig. 8: ein Blockschaltbild zur Darstellung des Ausgangszustandes für ein Ausführungsbeispiel der vorliegenden Erfindung.

In den Figuren sind funktionsgleiche Elemente mit denselben Bezugszeichen versehen, sofern nichts anderes angegeben ist.

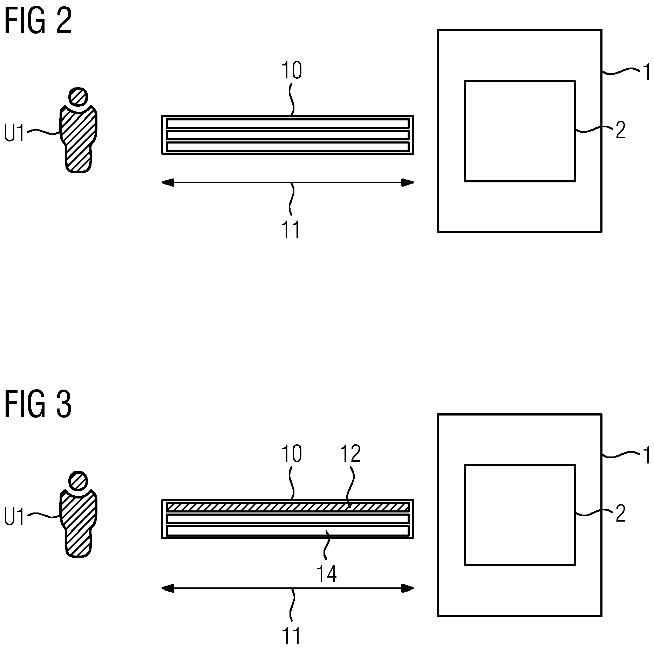

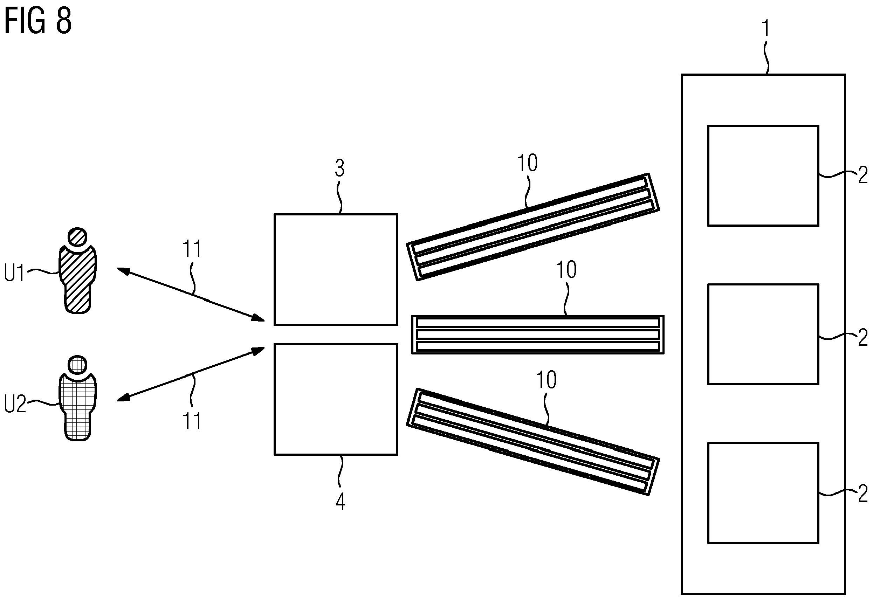

Figur 8 zeigt eine vereinfachte schematische Darstellung eines konventionellen Produktionssystems 1. Das Produktionssystem 1 umfasst beispielsweise drei Produktionssystemkomponenten 2. Die Anzahl der Produktionssystemkomponenten 2 eines Produktionssystems 1 ist nicht auf diese Anzahl begrenzt, sondern dient nur der verbesserten Veranschaulichung. Die Produktionssystemkomponente 2 kann beispielsweise Sensorik, Aktuatoren, Steuereinheiten und/oder Kommunikationseinheiten umfassen. Zudem weist jede Produktionssystemkomponente 2 eine Funktionalität, Fähigkeiten, und/oder Dienste auf und kann eine separate Sensorik und Datenverarbeitung umfassen. Jede der Produktionssystemkomponenten 2 stellt Informationen 10 bereit. Diese Informationen 10 sind zur verbesserten Veranschaulichung als ein Informationsbündel umfassend drei Informationen 10 dargestellt. Das Informationsbündel kann Informationen 12 umfassen, die für den Nutzer U1 relevant sind. Weiterhin kann das Informationsbündel Informationen 15 umfassen, die für den Nutzer U2 relevant sind. Zudem kann das Informationsbündel Informationen 13 umfassen, die sowohl für Nutzer U1, als auch für Nutzer U2 relevant sind. Ferner umfasst das Informationsbündel Informationen 14. Die Information 14 wird für keinen der Nutzer U1 und U2 als relevant erachtet. Alternativ können die Informationen 10 der Produktionskomponenten 2 gesammelt durch ein Informationsbündel des Produktionssystems 1 bereitgestellt werden. Die von dem Produktionssystem 1 und/oder den Produktionssystemkomponenten 2 bereitgestellten Informationen 10, werden an eine Datenverarbeitungseinheit 3 und/oder eine Datenausgabeeinheit 4 übertragen und können beispielsweise für Prozessplanung oder Prozesssteuerung, Fehlerbehebung verarbeitet oder visualisiert werden. Die bereitgestellten Informationen 10 werden in dem Ausführungsbeispiel der Figur 2 einem relevanten Nutzer U1 und einem relevanten Nutzer U2 bereitgestellt. Nutzer U1 hat beispielsweise die Rolle eines Maschinenbedieners und Nutzer U2 hat beispielsweise die Rolle eines Instandhaltungsingenieurs. Nutzer U1 und Nutzer U2 bekommen die gleichen Informationen 10 von dem Produktionssystem 1 und/oder den Produktionssystemkomponenten 2 bereitgestellt. Die Informationen 10 werden über eine Benutzerschnittstelle dem Nutzer U1 oder Nutzer U2 im aktiven Betrieb beispielsweise bei der Überwachung der Produktion oder Steuerung der Produktion bereitgestellt. Alternativ können die Informationen 10 gespeichert werden und abhängig einer folgenden Anwendung vorverarbeitet und bereitgestellt werden. Beispielsweise können die Informationen 10 in einer Datenbank gesammelt werden. Aufgrund dessen, dass das Tätigkeits- und Verantwortungsprofil von Nutzer U1 und Nutzer U2 unterschiedlich ist, werden sowohl Nutzer U1 als auch Nutzer U2 Informationen 10 angezeigt, die beispielsweise nicht von Relevanz für ihr Tätigkeits- und Verantwortungsprofil sind.

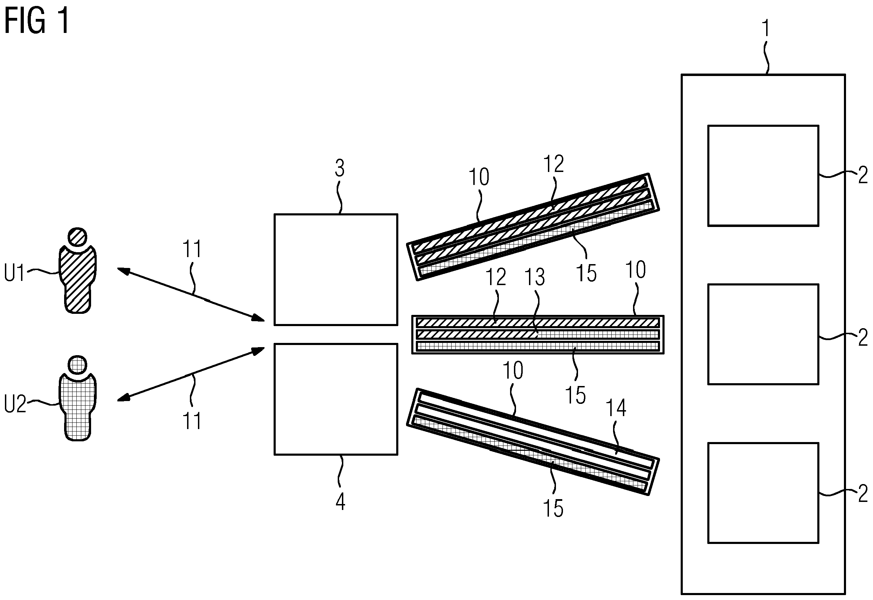

Figur 1 zeigt die vereinfachte schematische Darstellung eines konventionellen Produktionssystems 1 gemäß der Figur 8. Durch zukünftige Weiterentwicklungen an dem Produktionssystem 1 oder den Produktionssystemkomponenten 2 kann die Anzahl der bereitgestellten Informationen 10 weiter steigen, was zu einem erschwerten Verarbeiten und Nutzen der Informationen 10 führen kann. Um dieses Problem zu minimieren, können die von dem Produktionssystem 1 und/oder den Produktionssystemkomponenten 2 bereitgestellten Information 10 auf intelligente Weise, beispielsweise durch künstliche Intelligenz vorverarbeitet und nutzerorientiert mit Bezug auf das Tätigkeits- und Verantwortungsprofil von Nutzer U1 und/oder Nutzer U2 strukturiert bereitgestellt werden. In der Figur 1 werden dem Nutzer U1 und Nutzer U2 nur für Sie entsprechend relevante Daten bereitgestellt. Auf Basis eines Informationsaustauschs 11 zwischen den Nutzern U1 und U2 und einer Vorrichtung 1000 zum strukturierten Bereitstellen von Informationen 10 werden nur noch die für den jeweiligen Nutzer U1 oder U2 relevanten Informationen 10 bereitgestellt. Alternativ kann die Vorrichtung 1000 in den Produktionssystemkomponenten 2 implementiert sein bzw. kann das Verfahren 10 in der Logik der Produktionssystemkomponente 2 implementiert sein.

Durch den Informationsaustausch 11 und das damit verbundene Selektieren an nutzerrelevanten Informationen 10 kann ein Informationsselektionsmuster angelegt bzw. angelernt werden. Dieses angelernte Informationsselektionsmuster kann durch einen Nutzer gelernt oder trainiert werden, beispielsweise durch manuelle Selektion von relevanten Information 10. In einer alternativen Ausführungsform kann das Informationsselektionsmuster durch automatische Informationsselektion über ein Assistenzsystems A1 gelernt oder trainiert werden.

In Figur 1 umfasst das Datenbündel der Produktionssystemkomponente 2 des Produktionssystems 1 für den Nutzer U1 relevante Informationen 12 und für den Nutzer U2 relevante Informationen 15. Die Information 15 ist für den Nutzer U1 in dessen Informationsselektionsmuster als nicht relevant hinterlegt und wird dem Nutzer U1 über die Datenverarbeitungseinheit 3 oder der Datenausgabeeinheit 4 nicht bereitgestellt. Die Information 12 ist für den Nutzer U2 in dessen Informationsselektionsmuster als nicht relevant hinterlegt und wird dem Nutzer U2 über die Datenverarbeitungseinheit 3 oder der Datenausgabeeinheit 4 nicht bereitgestellt. In einer alternativen Ausführungsform werden nur Informationen dem Nutzer U1 und dem Nutzer U2 bereitgestellt, die als relevant hinterlegt sind.

Zudem kann ein Datenbündel der Produktionssystemkomponente 2 des Produktionssystems 1 Informationen 13 umfassen, die sowohl für den Nutzer U1 als auch den Nutzer U2 relevant sind. Die Information 13 wird den Nutzern U1 und U2 strukturiert über die Datenverarbeitungseinheit 3 oder Datenausgabeeinheit 4 bereitgestellt.

Zudem kann ein Datenbündel der Produktionssystemkomponente 2 des Produktionssystems 1 Informationen 14 umfassen, die sowohl für den Nutzer U1 als auch den Nutzer U2 nicht relevant sind. Die Information 14 wird den Nutzern U1 und U2 nicht über die Datenverarbeitungseinheit 3 oder Datenausgabeeinheit 4 bereitgestellt. Alternativ kann die Information 14 entsprechend dem Nutzer U1 oder U2 und dem entsprechenden Informationsselektionsmuster ausgeblendet sein. In einer alternativen Ausführungsform, können bisher nicht relevante Informationen 14 während der Laufzeit relevant werden. Die Relevanz der Informationen 14 kann sich zur Laufzeit ändern.

Figur 2 zeigt eine vereinfachte schematische Darstellung eines konventionellen Produktionssystem 1 gemäß der Figur 8. Das Produktionssystem 1 umfasst eine Produktionssystemkomponente 2. Zwischen der Produktionssystemkomponente 2 und dem Nutzer U1 erfolgt ein Informationsfluss 11. Die Produktionssystemkomponente 2 und/oder das Produktionssystem 1 stellen an den Nutzer U1 Informationen 10 bereit. In der Ausführungsform dargestellt in der Figur 2, werden alle Informationen 10 der Produktionssystemkomponente 2 und/oder des Produktionssystems 1 dem Nutzer bereitgestellt. Diese Informationen 10 können beispielsweise über eine Datenverarbeitungseinheit 3 und/oder eine Datenausgabeeinheit 4 dem Nutzer U1 bereitgestellt werden. Durch das Selektieren der relevanten Informationen 10 durch den Nutzer U1 wird ein ISM angelegt.

Figur 3 entspricht der gleichen schematischen Darstellung wie in Figur 2. In Figur 3 wird auf Basis eines erstellten ISM ermittelt, dass nur die Information 12 für den Nutzer U1 relevant ist. Die Information 12 kann beispielsweise auf einer Datenverarbeitungseinheit 3 oder einer Datenausgabeeinheit 4 dem Nutzer U1 bereitgestellt werden. Die Information 14 wird dem Nutzer U1 nicht bereitgestellt oder alternativ ausgeblendet.

Gemäß einer Ausführungsform kann das ISM manuell durch Informationsselektion eines Nutzers U1 gelernt oder trainiert werden. Dafür werden durch das Produktionssystem 1 und/oder die Produktionssystemkomponente 2 gemäß der Figur 2 über einen bestimmten Zeitraum t unter möglichst vielen unterschiedliche Zuständen des Produktionssystems 1 und/oder der Produktionssystemkomponente 2 Informationen 10 an den Nutzer 1 durch einen Informationsfluss 11 bereitgestellt. Durch Nutzer U1 wird mittels Selektion, beispielsweise mittels eines Feedbacks, der Nutzung der Information 10 oder der Reaktion auf die Information bestätigt, dass die Information 10 relevant, irrelevant oder erst ab einem bestimmten Schwellwert relevant ist. In einer alternativen Ausführungsform kann sich die Relevanz aus bestimmten Szenarien ergeben. Das Feedback kann beispielsweise über die Datenverarbeitungseinheit 3 oder Datenausgabeeinheit 4 durch den Nutzer U1 festgelegt werden. Die Datenausgabeeinheit 4 kann beispielsweise ein Touchdisplay zur Aus- und Eingabe von Informationen 10 umfassen. Durch das Selektieren kann das ISM als ein Deep Neural Network, beispielsweise ausgebildet als ein Concolutional Neural Network, und/oder ein Recurrent Neural Network und/oder ein Deep Feed Forward Network trainiert und angelernt werden. Nach dem Anlernen bzw. Training des ISM werden die an der Datenverarbeitungseinheit 3 und Datenausgabeeinheit 4 bereitgestellten Informationen 10 soweit reduziert, bis nur noch die für den Nutzer U1 relevanten Informationen 12 bereitgestellt werden. Im Fall des Auftretens neuer Informationen 10, durchlaufen diese Informationen 10 das gleiche Vorgehen und werden solange zusätzlich mit dem bereits als relevant eingestuften Informationen 12 bereitgestellt, bis die neuen Informationen 10 entweder als irrelevant angelernt wurde oder selbst Teil der relevanten Information 12 sind.

Gemäß einer weiteren Ausführungsform kann das ISM automatisch durch Informationsselektion eines Assistenzsystems A1 angelernt oder trainiert werden. Durch das Produktionssystem 1 und/oder die Produktionssystemkomponente 2 werden Informationen 10 bereitgestellt. Ein Assistenzsystem A1 beispielsweise ein Algorithmus, Skript, Tool oder Bot bzw. ein sogenanntes Heatmap erfassen das Selektionsverhalten eines Nutzers U1 in Bezug auf Zustände des Produktionssystems 1 und/oder der Produktionssystemkomponente 2 und erstellen ein Informationsselektionsmuster. Es ist kein aktives Feedback des Nutzer U1 notwendig. Das Assistenzsystem A1 läuft im Hintergrund und verfolgt die ausgeführten Aktivitäten des Nutzer U1. Mittels eines Deep Neural Netzwerk beispielsweise eines Concolutional Neural Netzwerks und/oder ein Recurrent Neural Netzwerks und/oder ein Deep Feed Forward Netzwerk, kann das Informationsselektionsmuster verarbeitet und diejenigen Informationen gedeutet werden, die für den Nutzer U1 relevant sind.

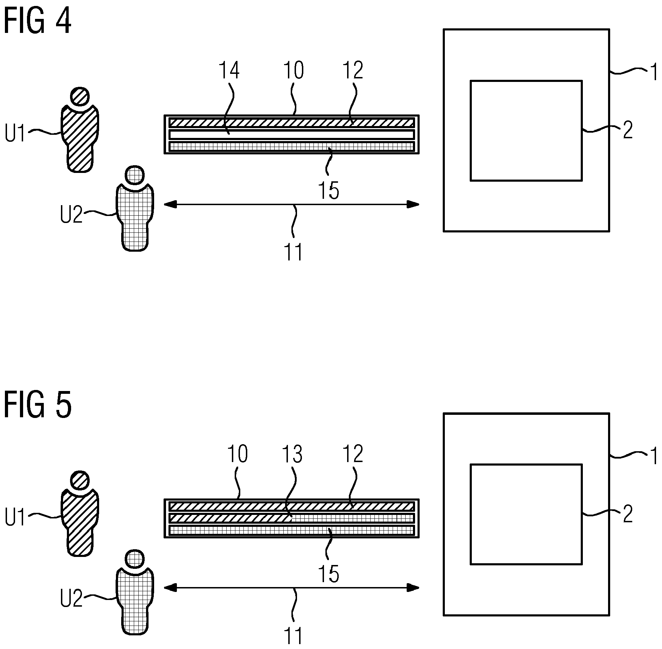

Figur 4 zeigt eine vereinfachte schematische Darstellung eines konventionellen Produktionssystem 1 mit einer Produktionssystemkomponente 2. Einem Nutzer U1 werden gemäß einem für den Nutzer U1 trainierten ISM die Information 12 der Informationen 10 bereitgestellt. Einem Nutzer U2 werden gemäß einem trainierten ISM für den Nutzer U2 die Information 15 der Informationen 10 bereitgestellt. Das ISM kann durch manuelle Informationsselektion eines Nutzer U1 und U2 oder durch automatische Informationsselektion eines Assistenzsystem A1 gelernt oder trainiert werden.

In einer weiteren Ausführungsform kann das vordefinierte ISM die Informationsselektion eines weiteren Nutzers U2 umfassen. Um auszuschließen das Informationen beispielsweise dem Nutzer U1 nicht bereitgestellt werden und somit keine Berücksichtigung erlangen, beispielsweise aufgrund von Unwissenheit und fehlender Erfahrung des Nutzers, werden zusätzlich zu dem manuellen Anlernen durch einen Nutzer und zu dem automatischen Anlernen durch ein Assistenzsystem A1, die Informationen von aufgabenverwandten Nutzern (Nutzer mit gleicher oder ähnlicher Aufgabe, beispielsweise gleicher Nutzer an einer anderen Produktionssystemkomponente 2 oder anderer Nutzer mit ähnlicher Aufgabe an der gleichen Produktionssystemkomponente 2) berücksichtigt und möglicherweise relevante Informationen 10 vorgeschlagen und bereitgestellt. So ist sichergestellt, dass der Nutzer aktiv unterstützt wird und alle relevanten Informationen 10 die der Nutzer für sich persönlich, aus unterschiedlichen Gründen für unwichtig erachtet, bereitgestellt werden.

Figur 5 zeigt eine vereinfachte schematische Darstellung eines konventionellen Produktionssystems 1 mit einer Produktionssystemkomponente 2, in der ein vordefiniertes ISM des Nutzers U2 für der Nutzer U1 berücksichtigt wird. Beispielsweise muss die Produktionssystemkomponente 2 aufgrund von übermäßigem Verschleiß gewartet werden. Der Nutzer U2, beispielsweise ein Instandhaltungsingenieur selektiert relevante Informationen 15 als kritisch. Die Vorrichtung 1000 stellt Nutzer U1, beispielsweise ein Maschinenbediener die gekennzeichneten Informationen 15 als relevante Informationen 13 bereit. Nutzer U1 wird die relevante Information 12 gemäß des ISM als auch die relevante Information 15 gemäß des ISM des Nutzers U2 bereitgestellt. Dadurch kann bei einem wiederholten Auftreten der kritischen Information 10 eine bessere Überwachung des Produktionssystems 1 und/oder der Produktionssystemkomponente 2, sowie die Vermeidung von unplanmäßigen Stillstandszeiten, beispielsweise durch bessere Planung und frühzeitige Identifikation von möglichen Problemen durch den Nutzer U2 gewährleistet werden.

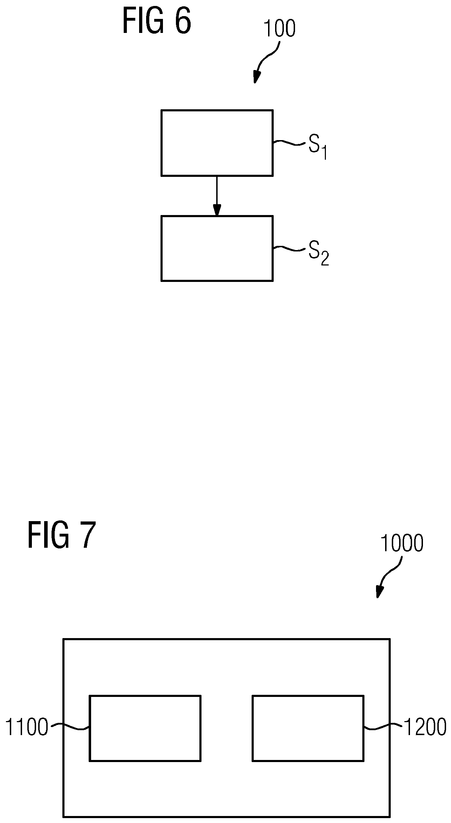

Fig. 6 zeigt ein Ablaufdiagramm zur Darstellung eines möglichen Ausführungsbeispiels eines erfindungsgemäßen Verfahrens zum strukturierten Bereitstellen von Informationen.

Das Verfahren umfasst bei dem dargestellten Ausführungsbeispiel mehrere Schritte. In einem ersten Schritt S1 erfolgt ein Empfangen wenigstens einer Information 10 von einem Produktionssystem 1 und/oder wenigstens einer Produktionssystemkomponente 2.

In einem weiteren Schritt S2 wird die empfangene Information 10 an eine Datenverarbeitungseinheit 3 und/oder Datenausgabeeinheit 4 bereitgestellt, falls die Information 10 einem Informationsselektionsmuster entspricht.

In einer Ausführungsform ist das erfindungsgemäße Verfahren 100 in eine Produktionssystemkomponente 2 implementiert. Jede Produktionssystemkomponente 2 ist lernfähig und entscheidet selbst, welche Informationen 10 an entsprechende Nutzer U1, U2 bereitgestellt werden. Für das Bereitstellen werden sowohl die direkt zwischen einem Nutzer U1 und Produktionssystem 1 und/oder Produktionssystemkomponente 2 ausgetauschten Information 10 über den Informationsfluss 11, als auch Informationen 10 von aufgabenverwandter Nutzer U1, U2 berücksichtigt. In vorteilhafter Weise werden die Nutzer U1, U2 durch die vorliegende Erfindung entlastet und können sich auf relevante Aufgaben fokussieren. Dies ermöglicht eine schnelle und vorausschauende Entscheidungsfindung in kritischen Situationen, sowie eine bessere Informationsbasis für die Planung, Steuerung und Optimierung des Produktionssystems 1 und/oder der Produktionssystemkomponente 2. Das Produktionssystems 1 und/oder die Produktionssystemkomponente 2 werden optimiert und können fehlerfrei besser eingesetzt werden.

Die vorliegende Erfindung ist nicht auf das Verwenden von Informationen 10 nur eines aufgabenverwandten Nutzers beschränkt. Gemäß der Erfindung können die Informationen 10 einer nicht festgelegten Anzahl aufgabenverwandter Nutzer zum Bereitstellen notwendiger Informationen verwendet werden.

Figur 7 zeigt ein Blockschaltbild zur Darstellung eines möglichen Ausführungsbeispiels einer erfindungsgemäßen Vorrichtung zum strukturierten Bereitstellen von Informationen.

Die Vorrichtung 1000 zum strukturierten Bereitstellen von Informationen 10 eines Produktionssystems 1 und/oder einer Produktionskomponente 2 an eine Datenverarbeitungseinheit 3 und/oder Datenausgabeeinheit 4, umfasst eine Kommunikationsschnittstelle 1100. Die Kommunikationsschnittstelle 1100 ist konfiguriert zum Empfangen wenigstens einer Information 10 von einem Produktionssystem 1 und/oder wenigstens einer Produktionskomponente 2. Weiterhin umfasst die Vorrichtung 1000 eine Verarbeitungseinheit 1200 konfiguriert zum Bereitstellen der empfangenen Information 10 an eine Datenverarbeitungseinheit 3 und/oder Datenausgabeeinheit 4 falls die Information 10 einem Informationsselektionsmuster entspricht. Die Verarbeitungseinheit kann als ein Prozessor oder Mikrocontroller ausgebildet sein.

In einer Ausführungsform ist die Vorrichtung 1000 in der Produktionssystemkomponente 2 selbst ausgebildet. In einer alternativen Ausführungsform ist die Vorrichtung 1000 als ein Rechner oder als ein Rechner in einem Rechnerverbund einer Cloud ausgebildet und steht über ein Netzwerk mit dem Produktionssystem 1 und/oder der Produktionssystemkomponente 2 in Kommunikation.

## Patentansprüche

1. Verfahren (100) zum strukturierten Bereitstellen von Informationen (10) eines Produktionssystems (1) und/oder einer Produktionssystemkomponente (2) an eine Datenverarbeitungseinheit (3) und/oder Datenausgabeeinheit (4), umfassend die Schritte:
- Empfangen (S1) wenigstens einer Information (10) von einem Produktionssystem (1) und/oder wenigstens einer Produktionssystemkomponente (2);
- Bereitstellen (S2) der empfangenen Information (10) an eine Datenverarbeitungseinheit (3) und/oder Datenausgabeeinheit (4), falls die Information (10) einem Informationsselektionsmuster, ISM, entspricht.

2. Verfahren nach Anspruch 1, wobei die Produktionssystemkomponente (2) Sensorik, Aktuatoren, Steuereinheiten, Überwachungseinheiten, Verarbeitungseinheiten und/oder Kommunikationseinheiten umfasst.

3. Verfahren nach einem der vorhergehenden Ansprüche 1 und 2, wobei die empfangene Information (10) zentral und/oder dezentral gespeichert ist und/oder in Echtzeit empfangen wird.

4. Verfahren nach einem der vorhergehenden Ansprüche 1 bis 3, wobei die Information (10) digitale und/oder analoge Informationen (10) umfasst.

5. Verfahren nach einem der vorhergehenden Ansprüche 1 bis 4, wobei das ISM vordefinierte Informationsselektionsmuster und/oder gelernte Informationsselektionsmuster umfasst.

6. Verfahren nach Anspruch 5, wobei das ISM manuell durch Informationsselektion eines Nutzers (U1) gelernt oder trainiert wird.

7. Verfahren nach einem der vorhergehenden Ansprüche 5 oder 6, wobei das ISM automatisch durch Informationsselektion eines Assistenzsystems (A1) gelernt oder trainiert wird.

8. Verfahren nach einem der vorhergehenden Ansprüche 5 und 7, wobei das vordefinierte ISM die Informationsselektion eines weiteren Nutzers (U2) umfasst.

9. Verfahren nach einem der vorhergehenden Ansprüche 5 bis 8, wobei das Lernen oder Training über eine Zeitdauer (t) erfolgt.

10. Verfahren nach einem der vorhergehenden Ansprüche 1 bis 9, wobei das ISM als ein Deep Neural Netzwerk, DNN, ausgebildet ist und ein Concolutional Neural Netzwerk, CNN, und/oder ein Recurrent Neural Netzwerk und/oder ein Deep Feed Forward Netzwerk umfasst.

11. Vorrichtung (1000) zum strukturierten Bereitstellen von Informationen (10) eines Produktionssystems (1) und/oder einer Produktionskomponente (2) an eine Datenverarbeitungseinheit (3) und/oder Datenausgabeeinheit (4), umfassend:
- eine Kommunikationsschnittstelle (1100) konfiguriert zum Empfangen wenigstens einer Information (10) von einem Produktionssystem (1) und/oder wenigstens einer Produktionskomponente (2);
- eine Verarbeitungseinheit (1200) konfiguriert zum Bereitstellen der empfangenen Information (10) an eine Datenverarbeitungseinheit (3) und/oder Datenausgabeeinheit (4) falls die Information (10) einem Informationsselektionsmuster, ISM, entspricht.

12. Vorrichtung (1000) nach Anspruch 2, wobei die Kommunikationsschnittstelle (1100) konfiguriert ist, die bereitgestellte Information (10) an die Datenverarbeitungseinheit (3) und/oder Datenausgabeeinheit (4) zu übertragen.

13. Produktionssystemkomponente (4), welche eine Vorrichtung (1000) gemäß Anspruch 11 und 12 umfasst, ausgebildet, ein Verfahren (100) gemäß einem der Ansprüche 1 bis 10 auszuführen.

14. Computerprogrammprodukt, welches die Durchführung eines Verfahrens (100) gemäß einem der Ansprüche 1 bis 10 veranlasst.

15. Datenspeicher, für das Computerprogrammprodukt nach Anspruch 14, wobei der Datenspeicher das Computerprogrammprodukt speichert und/oder bereitstellt.
